# EUROPÄISCHE PATENTSCHRIFT

(11) **EP 3 862 597 B1**
(45) Veröffentlichungstag und Bekanntmachung des Hinweises auf die Patenterteilung: **21.12.2022**
(21) Anmeldenummer: 21154488.7
(22) Anmeldetag: 01.02.2021
(51) Int. Cl.: F16H 61/30, F16H 61/34, F16H 63/20

(54) **SCHALTMODUL FÜR DIE BETÄTIGUNG EINES AUTOMATISIERTEN SCHALTGETRIEBES**
SHIFT MODULE FOR ACTUATING AN AUTOMATED SHIFT TRANSMISSION
MODULE DE COMMUTATION POUR L'ACTIONNEMENT D'UN ENGRENAGE COMMUTABLE AUTOMATISÉ

(30) Priorität: 07.02.2020 DE 102020103143
(43) Veröffentlichungstag der Anmeldung: 11.08.2021
(73) Patentinhaber: ZF CV Systems Europe BV, 1170 Brussels (BE)
(72) Erfinder: RUTSCH, Andreas, 30519 Hannover (DE)
(74) Vertreter: Ohlendorf, Henrike

(56) Entgegenhaltungen:
- EP-A1- 0 541 035
- CN-A- 109 519 529
- DE-A1-102008 000 072
- FR-A1- 2 580 344

## Beschreibung

Die Erfindung betrifft ein Schaltmodul für die Betätigung eines automatisierten Schaltgetriebes, mit zumindest einem als ein hydraulischer oder pneumatischer Schaltzylinder ausgebildeten Schaltaktuator, dessen Kolbenstange im montierten Zustand axialfest mit einer als Hohlwelle ausgebildeten Schaltstange einer getriebeinternen Schaltvorrichtung in Stellverbindung ist, und mit einem als hydraulischer oder pneumatischer Wählzylinder ausgebildeten Wählaktuator, dessen Kolbenstange eine quer zu ihrer Längsachse ausgerichtete U-förmige Aufnahme aufweist, in welche im montierten Zustand ein drehfest mit einer getriebeinternen Wählstange in Stellverbindung stehender Schwenkhebel eingreift.

Automatisierte Schaltgetriebe von Kraftfahrzeugen sind häufig von manuell schaltbaren Schaltgetrieben abgeleitet, bei denen hierzu ein getriebeexternes Schaltgestänge oder eine getriebeexterne Seilzugschaltvorrichtung durch ein Schaltmodul mit hydraulischen, pneumatischen oder elektromotorischen Schaltaktuatoren und Wählaktuatoren ersetzt ist. In der Druckschrift 8150202663 WABCO Automatisiertes Schaltgetriebe (AMT) der WABCO GmbH sind beispielsweise mehrere Ausführungen eines dort als Getriebesteller GS 3.0, GS 3.3 und GS 3.6 bezeichneten Schaltmoduls beschrieben. Dieses Schaltmodul weist drei als pneumatische Schaltzylinder ausgebildete Schaltaktuatoren und einen als pneumatischer Wählzylinder ausgebildeten Wählaktuator auf. Diese Aktuatoren sind demnach als Kolben-Zylinder-Anordnungen ausgebildet. Die Schaltzylinder sind parallel zueinander angeordnet und weisen an ihren Kolbenstangen jeweils einen rotationssymmetrischen, stempelkopfförmigen Stangenkopf auf, der im montierten Zustand formschlüssig und koaxial in eine entsprechende Aufnahme einer zugeordneten Schaltstange des Schaltgetriebes eingreift. Der Wählzylinder ist quer zu den Schaltzylindern angeordnet und weist an seiner Kolbenstange eine quer zu ihrer Längsachse ausgerichtete U-förmige Aufnahme auf, in die im montierten Zustand ein drehfest mit einer in einer der getriebeinternen Schaltstangen drehbar gelagerten Wählstange verbundener Schwenkhebel eingreift.

Diese Ausführungen des Schaltmoduls sind für verschiedene Ausführungen des AS-Tronic-Getriebes der ZF Friedrichshafen AG vorgesehen, bei dem es sich um ein Gruppengetriebe mit einem mehrstufigen Hauptgetriebe, einer dem Hauptgetriebe vorgeschalteten zweistufigen Splitgruppe und einer dem Hauptgetriebe nachgeschalteten zweistufigen Bereichsgruppe handelt. Dem Hauptgetriebe ist eine einzige Schaltstange zugeordnet, die als Hohlwelle ausgeführt ist, und auf der je nach Ausführung zwei oder drei Schaltgabeln axial verschiebbar gelagert sind. In der Schaltstange ist eine Wählstange um ihre Längsachse drehbar gelagert angeordnet, mittels deren Drehung als Formschlusselemente wirksame Gleitsteine, die in Öffnungen der Schaltstange radial geführt sind und an Rampenflächen oder Sperrflächen der Wählstange anliegen, zur formschlüssigen Ankopplung einer der Schaltgabeln an die Schaltstange radial nach außen gedrückt und dort gehalten sowie zur Entkopplung der übrigen Schaltgabeln von der Schaltstange radial nach innen freigegeben werden.

In der DE 10 2008 000 072 A1 ist eine entsprechende Schaltvorrichtung eines Schaltgetriebes beschrieben, bei der eine Wählstange koaxial in einer hohlen Schaltstange angeordnet ist und bei der die Wählstange in einem Wählvorgang zur Ankopplung einer von mehreren Schaltgabeln sowie zur Abkopplung der übrigen Schaltgabeln axial verschiebbar oder um ihre Längsachse drehbar ist.

EP0541035A1 offenbart ein Getriebeschaltsystem mit einem äußeren Gehäuse, eine Eingangswelle, einer Ausgangswelle, einer Anzahl von Zahnradpaaren, die wahlweise durch gleitende Kupplungsglieder gekuppelt werden zur Herstellung einer winkelmaßigen Kupplung zwischen der Eingangswelle und der Ausgangswelle entsprechend einer Anzahl von Übersetzungsverhältnissen, Fluidbetätigungsmitteln, die die gleitenden Kupplungsglieder steuern, und Ventileinrichtungen, die die Betätigungsmitteln betätigen, welches Getriebeschaltsystem eine Anzahl von in Reihe angeordneten Übertragungsstufen aufweist, wobei die Betätigungsmittle erste Betätigungsmittel zur Verschiebung der Zahnräder in jeder der Übertragungsstufen aufweisen.

CN109519529A offenbart allgemein ein elektropneumatische Schaltungssystem für eine Fahrzeuggetriebe.

Bislang war der Schwenkhebel der getriebeinternen Schaltvorrichtung zugeordnet und drehfest an der in der Schaltstange des Hauptgetriebes drehbar gelagerten Wählstange befestigt. Hierdurch ist es erforderlich, dass das äußere Ende des Schwenkhebels bei der Montage des Schaltmoduls an dem Schaltgetriebe in die U-förmige Aufnahme an der Kolbenstange des Wählaktuators eingeführt wird, was schwierig zu bewerkstelligen ist und eine mögliche Fehlerquelle darstellt.

Der vorliegenden Erfindung lag daher die Aufgabe zugrunde, ein Schaltmodul für die Betätigung eines automatisierten Schaltgetriebes der eingangs genannten Bauart vorzustellen, bei dem die genannte Fehlerquelle bei der Montage des Schaltmoduls an dem Schaltgetriebe nicht mehr vorhanden ist, und das somit einfacher an dem Schaltgetriebe montierbar ist.

Diese Aufgabe ist durch ein Schaltmodul mit den Merkmalen des Anspruchs 1 gelöst. Vorteilhafte Weiterbildungen dieses Schaltmoduls sind in den davon abhängigen Ansprüchen definiert.

Demnach betrifft die Erfindung ein Schaltmodul für die Betätigung eines automatisierten Schaltgetriebes, mit zumindest einem als ein hydraulischer oder pneumatischer Schaltzylinder ausgebildeten Schaltaktuator, dessen Kolbenstange im montierten Zustand axialfest mit einer als Hohlwelle ausgebildeten Schaltstange einer getriebeinternen Schaltvorrichtung in Stellverbindung ist, und mit einem als hydraulischer oder pneumatischer Wählzylinder ausgebildeten Wählaktuator, dessen Kolbenstange eine quer zu ihrer Längsachse ausgerichtete U-förmige Aufnahme aufweist, in welche im montierten Zustand ein drehfest mit einer getriebeinternen Wählstange in Stellverbindung stehender Schwenkhebel eingreift.

Bei diesem Schaltmodul ist zur Lösung der genannten Aufgabe vorgesehen, dass der Schwenkhebel dem Schaltmodul zugeordnet ist sowie drehfest an der Kolbenstange des Schaltzylinders befestigt ist, und dass die Kolbenstange des Schaltzylinders im montierten Zustand axialfest sowie drehfest mit der Wählstange des Schaltgetriebes verbunden ist, welche ihrerseits axialfest und um ihre Längsachse drehbar gelagert in der getriebeinternen Schaltstange angeordnet ist.

Dadurch, dass der Schwenkhebel nun erfindungsgemäß dem Schaltmodul zugeordnet und drehfest an der Kolbenstange des Schaltzylinders befestigt ist, entfällt bei der Montage des Schaltmoduls an dem Schaltgetriebe das schwierige Einführen des äußeren Endes des Schwenkhebels in die U-förmige Aufnahme des Wählaktuators. Die dadurch bislang bestehende Fehlerquelle bei der Montage des Schaltmoduls am Gehäuse des Schaltgetriebes ist dadurch beseitigt.

Um die Wählvorgänge und Schaltvorgänge wie bisher durch eine Drehung der Wählstange beziehungsweise durch eine Axialverschiebung der Schaltstange durchführen zu können, ist die Kolbenstange des Schaltzylinders im montierten Zustand nun axialfest und drehfest mit der Wählstange des Schaltgetriebes verbunden. Die Wählstange ist zusätzlich zur drehbaren Lagerung in der Schaltstange des Schaltgetriebes auch axialfest in der Schaltstange des Schaltgetriebes gelagert angeordnet, damit die in einer Axialverschiebung bestehende Schaltbewegung von der Wählstange auf die Schaltstange übertragen werden kann. Somit wird sowohl die Drehung der Kolbenstange als auch die Axialverschiebung der Kolbenstange des Schaltzylinders auf die Wählstange des Schaltgetriebes übertragen. Durch die Drehung der Wählstange um ihre Längsachse wird in einem Wählvorgang eine der Schaltgabeln mit der Schaltstange gekoppelt und die übrigen Schaltgabeln von der Schaltstange entkoppelt. Durch die von der Wählstange auf die Schaltstange übertragene Axialverschiebung erfolgt ein Schaltvorgang, also das Auslegen eines zuvor lastführenden Lastgangs und/oder das Einlegen eines Zielgangs mittels der angekoppelten Schaltgabel.

Zur robusten Befestigung des Schwenkhebels an der Kolbenstange des Schaltzylinders ist bevorzugt vorgesehen, dass der Schwenkhebel einen ringförmigen Hebelkopf aufweist, dass der Schwenkhebel mittels seines Hebelkopfes spielfrei auf der Kolbenstange des Schaltzylinders angeordnet ist, und dass der Schwenkhebel mittels eines zylinderstiftförmigen Befestigungselements axialfest sowie drehfest mit der Kolbenstange des Schaltzylinders verbunden ist, welches in eine die Kolbenstange und den Hebelkopf durchdringende Radialbohrung eingesetzt ist.

Bei dem Befestigungselement handelt es sich bevorzugt um einen Spannstift, eine Spannhülse oder einen Splint. Möglich ist jedoch auch die Verwendung einer Schraube, eines Niets oder eines anderen Befestigungselementes, um den Schwenkhebel an der Kolbenstange des Schaltzylinders zu befestigen.

Zur Realisierung der axialfesten und drehfesten Verbindung der Kolbenstange des Schaltzylinders mit der Wählstange des Schaltgetriebes ist vorgesehen, dass die Kolbenstange des Schaltzylinders einen stempelkopfförmigen Stangenkopf aufweist, dass der Stangenkopf einen zylinderscheibenförmigen Endkörper aufweist, welcher über einen U-förmigen Kernsteg mit der übrigen Kolbenstange verbundenen ist, und dass die Kolbenstange des Schaltzylinders im montierten Zustand mit dem Stangenkopf formschlüssig sowie koaxial in eine geometrisch dazu kongruente Aufnahme in der Wählstange des Schaltgetriebes eingreift.

Im Unterschied zu der bislang rotationssymmetrischen Ausbildung des stempelkopfförmigen Stangenkopfes der Kolbenstange des Schaltzylinders ist durch die parallelen Flanken des U-förmigen Kernstegs und die entsprechenden parallelen Flanken der Aufnahme der Wählstange nun auf einfache und platzsparende Weise eine drehfeste Verbindung zwischen der Kolbenstange des Schaltzylinders und der Wählstange des Schaltgetriebes realisiert.

Die Erfindung wird nachstehend anhand eines in der beigefügten Zeichnung dargestellten Ausführungsbeispiels erläutert. In der Zeichnung zeigt
Fig. 1 ein erfindungsgemäßes Schaltmodul in einer perspektivischen Gesamtansicht,
Fig. 2 ein Schaltzylinder mit Kolbenstange und einen Schwenkhebel des Schaltmoduls gemäß Fig. 1 in einer perspektivischen Teilansicht,
Fig. 3 den Schaltzylinder und den Schenkhebel gemäß Fig. 2 mit einer geschnittenen Kolbenstange des Schaltzylinders in einer perspektivischen Teilansicht, und
Fig. 4 die Verbindungsbereiche der Kolbenstange des Schaltzylinders des Schaltmoduls und der getriebeinternen Wählstange, wobei letztere axialfest und koaxial drehbar mit einer getriebeinternen Schaltstange verbunden ist.

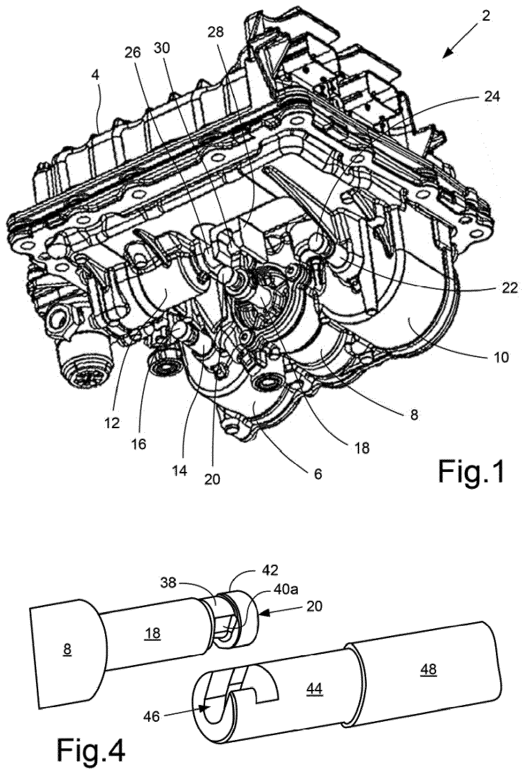

Das in Fig. 1 abgebildete Schaltmodul 2 ist zur Schaltbetätigung eines nicht dargestellten Gruppengetriebes mit einem mehrstufigen Hauptgetriebe, einer dem Hauptgetriebe vorgeschalteten zweistufigen Splitgruppe und einer dem Hauptgetriebe nachgeschalteten zweistufigen Bereichsgruppe vorgesehen. Dazu sind an der dem Schaltgetriebe zugewandten Innenseite eines Gehäuses 4 drei als Kolben-Zylinder-Anordnungen ausgebildete Schaltzylinder 6, 8, 10 und ein Wählzylinder 12 angeordnet. Die Schaltzylinder 6, 8, 10 sind pneumatisch betätigbar und parallel zueinander angeordnet. Der Wählzylinder 12 ist ebenfalls pneumatisch betätigbar ausgebildet und quer beziehungsweise senkrecht zu den drei Schaltzylindern 6, 8, 10 angeordnet.

Der in Fig. 1 links angeordnete erste Schaltzylinder 6 ist der Splitgruppe des Gruppengetriebes zugeordnet und weist an seiner Kolbenstange 14 zur formschlüssigen axialfesten Ankopplung an die zugeordnete Schaltstange der Splitgruppe einen rotationssymmetrischen, stempelkopfförmigen Stangenkopf 16 auf. Der in Fig. 1 rechts angeordnete zweite Schaltzylinder 10 ist der Bereichsgruppe des Gruppengetriebes zugeordnet und weist an seiner Kolbenstange 22 zur formschlüssigen axialfesten Ankopplung an die zugeordnete Schaltstange der Bereichsgruppe ebenfalls einen rotationssymmetrischen stempelkopfförmigen Stangenkopf 24 auf.

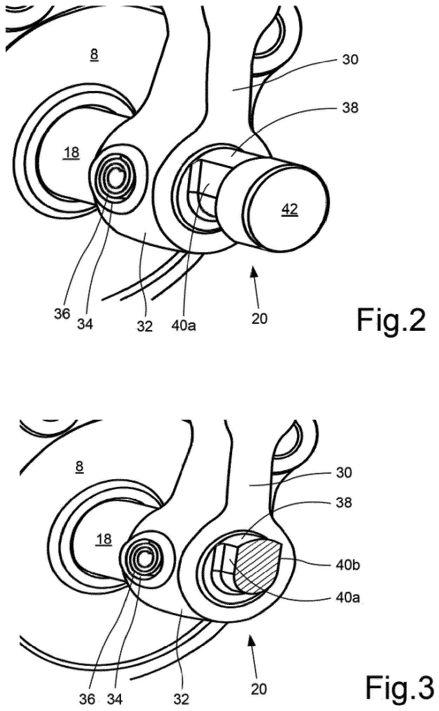

Der in Fig. 1 zwischen dem linken Schaltzylinder 6 und dem rechten Schaltzylinder 10 angeordnete dritte , mittlere Schaltzylinder 8 ist dem Hauptgetriebe des Gruppengetriebes zugeordnet und weist an seiner Kolbenstange 18 zur formschlüssigen Ankopplung an die zugeordnete Wählstange 44 des Hauptgetriebes einen im Vergleich dazu modifizierten stempelkopfförmigen Stangenkopf 20 auf, dessen Geometrie weiter unten anhand der Figuren 2 bis 4 erläutert wird. Der Wählzylinder 12 weist an seiner Kolbenstange 26 einen quer zu ihrer Längsachse ausgerichtete U-förmige Aufnahme 28 auf, in die ein axialfest und drehfest auf der Kolbenstange 18 des Schaltzylinders 8 befestigter Schwenkhebel 30 eingreift.

Innerhalb des Gehäuses 4 des Schaltmoduls 2 sind eine elektronische Steuereinheit und Magnetventile zur Ansteuerung der Schalt- und Wählzylinder 6, 8, 10, 12 angeordnet, welche jedoch nicht sichtbar sind.

In den Figuren 2 und 3 sind die Befestigung des Schwenkhebels 30 an der Kolbenstange 18 des Schaltzylinders 8 sowie der Aufbau des Stangenkopfes 20 der Schaltstange 18 des mittleren Schaltzylinders 8 in jeweils einem vergrößerten Ausschnitt näher dargestellt.

Der Schwenkhebel 30 ist mit seinem ringförmigen Hebelkopf 32 spielfrei auf der Kolbenstange 18 des mittleren Schaltzylinders 8 angeordnet und mittels eines zylinderstiftförmigen Befestigungselements 36, das in eine die Kolbenstange 18 und den Schwenkhebels 30 durchdringende Radialbohrung 34 eingesetzt ist, axialfest und drehfest mit der Kolbenstange 18 des mittleren Schaltzylinders 8 verbunden. Das Befestigungselement 36 ist vorliegend beispielhaft als eine gewickelte Spannhülse ausgeführt.

Der stempelkopfförmige Stangenkopf 20 der Kolbenstange 18 des Schaltzylinders 8 weist einen über einen im Querschnitt U-förmigen Kernsteg 38 mit der übrigen Kolbenstange 18 verbundenen zylinderscheibenförmigen Endkörper 42 auf. In Fig. 3 ist der Stangenkopf 20 der Kolbenstange 18 mit abgeschnittenem Endkörper 42 abgebildet, wodurch der U-förmige Kernsteg 38 mit seinen beiden parallelen Seitenwänden 40a, 40b besser erkennbar ist.

Wie insbesondere Fig. 4 veranschaulicht greift im montierten Zustand des Schaltmoduls 2 der Stangenkopf 20 der Kolbenstange 18 des mittleren Schaltzylinders 8 formschlüssig sowie koaxial in eine geometrisch kongruent daran angepasste Aufnahme 46 in der Wählstange 44 des Hauptgetriebes ein, wodurch neben einer axialfesten Verbindung durch das Anliegen der beiden parallelen Seitenwände 40a, 40b des Kernstegs 38 an entsprechende parallele Seitenwände der Aufnahme 46 der Wählstange 44 auch eine drehfeste Verbindung zwischen der Kolbenstange 18 des Schaltzylinders 8 und der Wählstange 44 des Hauptgetriebes gegeben ist.

In dem nicht weiter dargestellten Hauptgetriebe ist die Wählstange 44 axialfest und um ihre Längsachse drehbar gelagert in der Schaltstange 48 des Hauptgetriebes angeordnet, so dass ein durch eine Axialverschiebung der Kolbenstange 26 des Wählzylinders 12 bewirkter Wählvorgang über den Schwenkhebel 30 sowie die Kolbenstange 18 des Schaltzylinders 8 in Form einer Drehung der Wählstange 44 des Hauptgetriebes in das Hauptgetriebe eingeleitet wird, und dort ein durch eine Axialverschiebung der Kolbenstange 18 des Schaltzylinders 8 bewirkter Schaltvorgang über die Wählstange 44 des Hauptgetriebes in Form einer Axialverschiebung der Schaltstange 48 in das Hauptgetriebe durchgeführt wird.

Durch die Anordnung des Schwenkhebels 30 innerhalb der Baugruppe des Schaltmoduls 2 ist die Montage des Schaltmoduls 2 an dem Gruppengetriebe vereinfacht, da dadurch das zuvor erforderliche Einführen des äußeren Endes des Schwenkhebels 30 in die U-förmige Aufnahme 28 des Wählaktuators 12 entfällt.

### Bezugszeichenliste (Bestandteil der Beschreibung)

- 2: Schaltmodul
- 4: Gehäuse des Schaltmoduls
- 6: Erster Schaltaktuator, Schaltzylinder
- 8: Zweiter Schaltaktuator, Schaltzylinder
- 10: Dritter Schaltaktuator, Schaltzylinder
- 12: Wählaktuator, Wählzylinder
- 14: Kolbenstange des ersten Schaltaktuators
- 16: Stangenkopf des ersten Schaltaktuators
- 18: Kolbenstange des zweiten Schaltaktuators
- 20: Stangenkopf des zweiten Schaltaktuators
- 22: Kolbenstange des dritten Schaltaktuators
- 24: Stangenkopf des dritten Schaltaktuators
- 26: Kolbenstange des Wählaktuators
- 28: U-förmige Aufnahme an der Kolbenstange des Wählaktuators
- 30: Schwenkhebel
- 32: Hebelkopf des Schwenkhebels
- 34: Radialbohrung im Hebelkopf
- 36: Befestigungselement, Spannhülse
- 38: Kernsteg der Kolbenstange des zweiten Schaltaktuators
- 40a: Erste Seitenwand des Kernstegs
- 40b: Zweite Seitenwand des Kernstegs
- 42: Endkörper des Kernstegs
- 44: Wählstange des Hauptgetriebes
- 46: Aufnahme in der Wählstange des Hauptgetriebes
- 48: Schaltstange des Hauptgetriebes

## Patentansprüche

1. Schaltmodul (2) für die Betätigung eines automatisierten Schaltgetriebes, mit zumindest einem als ein hydraulischer oder pneumatischer Schaltzylinder (8) ausgebildeten Schaltaktuator, dessen Kolbenstange (18) im montierten Zustand axialfest mit einer als Hohlwelle ausgebildeten Schaltstange (48) einer getriebeinternen Schaltvorrichtung in Stellverbindung ist, und mit einem als hydraulischer oder pneumatischer Wählzylinder (12) ausgebildeten Wählaktuator, dessen Kolbenstange (26) eine quer zu ihrer Längsachse ausgerichtete U-förmige Aufnahme (28) aufweist, in welche im montierten Zustand ein drehfest mit einer getriebeinternen Wählstange (44) in Stellverbindung stehender Schwenkhebel (30) eingreift, **dadurch gekennzeichnet, dass** der Schwenkhebel (30) dem Schaltmodul (2) zugeordnet ist sowie drehfest an der Kolbenstange (18) des Schaltzylinders (8) befestigt ist, und dass die Kolbenstange (18) des Schaltzylinders (8) im montierten Zustand axialfest sowie drehfest mit der Wählstange (44) des Schaltgetriebes verbunden ist, die ihrerseits axialfest und um ihre Längsachse drehbar gelagert in der getriebeinternen Schaltstange (48) angeordnet ist.

2. Schaltmodul nach Anspruch 1, **dadurch gekennzeichnet, dass** der Schwenkhebel (30) einen ringförmigen Hebelkopf (32) aufweist, dass der Schwenkhebel (30) mittels seines Hebelkopfes (32) spielfrei auf der Kolbenstange (18) des Schaltzylinders (8) angeordnet ist, und dass der Schwenkhebel (30) mittels eines zylinderstiftförmigen Befestigungselements (36) axialfest sowie drehfest mit der Kolbenstange (18) des Schaltzylinders (8) verbunden ist, welches in eine die Kolbenstange (18) und den Hebelkopf (32) durchdringende Radialbohrung (34) eingesetzt ist.

3. Schaltmodul nach Anspruch 2, **dadurch gekennzeichnet, dass** das Befestigungselement (36) als ein Spannstift, als eine Spannhülse oder als ein Splint ausgebildet ist.

4. Schaltmodul nach einem der Ansprüche 1 bis 3, **dadurch gekennzeichnet, dass** die Kolbenstange (18) des Schaltzylinders (8) einen stempelkopfförmigen Stangenkopf (20) aufweist,
dass der Stangenkopf (20) einen zylinderscheibenförmigen Endkörper (42) aufweist, welcher über einen U-förmigen Kernsteg (38) mit der übrigen Kolbenstange (18) verbundenen ist, und dass die Kolbenstange (18) des Schaltzylinders (8) im montierten Zustand mit dem Stangenkopf (20) formschlüssig sowie koaxial in eine geometrisch dazu kongruente Aufnahme (46) in der Wählstange (44) des Schaltgetriebes eingreift.

## Claims

1. Shifting module (2) for the actuation of an automated manual transmission, with at least one shifting actuator which is configured as a hydraulic or pneumatic shifting cylinder (8) and the piston rod (18) of which, in the mounted state, is in an actuating connection in an axially fixed manner to a shifting rod (48), configured as a hollow shaft, of a transmission-internal shifting apparatus, and with a selector actuator which is configured as a hydraulic or pneumatic selector cylinder (12) and the piston rod (26) of which has a U-shaped receptacle (28) which is oriented transversely with respect to its longitudinal axis and in which, in the mounted state, a pivoting lever (30) engages which is in an actuating connection fixedly to a transmission-internal selector rod (44) for conjoint rotation, **characterized in that** the pivoting lever (30) is assigned to the shifting module (2) and is fastened fixedly to the piston rod (18) of the shifting cylinder (8) for conjoint rotation, and **in that**, in the mounted state, the piston rod (18) of the shifting cylinder (8) is connected to the selector rod (44) of the manual transmission in an axially fixed manner and fixedly for conjoint rotation, which selector rod (44) is for its part arranged in the transmission-internal shifting rod (48) in a manner which is mounted axially fixedly and such that it can be rotated about its longitudinal axis.

2. Shifting module according to Claim 1, **characterized in that** the pivoting lever (30) has an annular lever head (32), **in that** the pivoting lever (30) is arranged by means of its lever head (32) without play on the piston rod (18) of the shifting cylinder (8), and **in that** the pivoting lever (30) is connected by means of a cylindrical pin-shaped fastening element (36) to the piston rod (18) of the shifting cylinder (8) axially fixedly and fixedly for conjoint rotation, which shifting cylinder (8) is inserted into a radial bore (34) which penetrates the piston rod (18) and the lever head (32).

3. Shifting module according to Claim 2, **characterized in that** the fastening element (36) is configured as a clamping pin, as a clamping sleeve or as a splint.

4. Shifting module according to one of Claims 1 to 3, **characterized in that** the piston rod (18) of the shifting cylinder (8) has a stamping head-shaped rod head (20), **in that** the rod head (20) has a cylindrical disc-shaped end body (42) which is connected via a U-shaped core web (38) to the remaining piston rod (18), and **in that**, in the mounted state, the piston rod (18) of the shifting cylinder (8) engages with the rod head (20) in a positively locking and coaxial manner into a receptacle (46) which is geometrically congruent with respect to it in the selector rod (44) of the manual transmission.

## Revendications

1. Module de commutation (2) pour l'actionnement d'une boîte de vitesses automatisée, comprenant au moins un actionneur de commutation configuré sous la forme d'un cylindre de commutation hydraulique ou pneumatique (8), dont la tige de piston (18) est, à l'état monté, en liaison de réglage immobile axialement avec une tige de commutation (48) configurée sous forme d'arbre creux d'un dispositif de commutation interne à la boîte de vitesses, et comprenant un actionneur de sélection configuré sous forme de cylindre de sélection hydraulique ou pneumatique (12), dont la tige de piston (26) présente un logement (28) en forme de U orienté transversalement à son axe longitudinal, dans lequel s'engage, à l'état monté, un levier pivotant (30) en liaison de réglage immobile en rotation avec une tige de sélection (44) interne à la boîte de vitesse, **caractérisé en ce que** le levier pivotant (30) est associé au module de commutation (2) et est fixé de manière immobile en rotation à la tige de piston (18) du cylindre de commutation (8), et **en ce que** la tige de piston (18) du cylindre de commutation (8) est reliée, à l'état monté, de manière immobile axialement et de manière immobile en rotation à la tige de sélection (44) de la boîte de vitesses, qui est elle-même agencée en étant montée de manière immobile axialement et de manière rotative autour de son axe longitudinal dans la tige de commutation (48) interne à la boîte de vitesses.

2. Module de commutation selon la revendication 1, **caractérisé en ce que** le levier pivotant (30) présente une tête de levier annulaire (32), **en ce que** le levier pivotant (30) est agencé sans jeu sur la tige de piston (18) du cylindre de commutation (8) au moyen de sa tête de levier (32), et **en ce que** le levier pivotant (30) est relié de manière immobile axialement et de manière immobile en rotation à la tige de piston (18) du cylindre de commutation (8) au moyen d'un élément de fixation (36) en forme de goupille cylindrique, qui est inséré dans un perçage radial (34) traversant la tige de piston (18) et la tête de levier (32).

3. Module de commutation selon la revendication 2, **caractérisé en ce que** l'élément de fixation (36) est configuré sous la forme d'une goupille de serrage, d'une douille de serrage ou d'une goupille fendue.

4. Module de commutation selon l'une quelconque des revendications 1 à 3, **caractérisé en ce que** la tige de piston (18) du cylindre de commutation (8) présente une tête de tige en forme de tête de poinçon (20),
**en ce que** la tête de tige (20) présente un corps d'extrémité (42) en forme de disque cylindrique, qui est relié au reste de la tige de piston (18) par l'intermédiaire d'une âme (38) en forme de U, et **en ce que** la tige de piston (18) du cylindre de commutation (8), à l'état monté, s'engage avec la tête de tige (20) par complémentarité de forme et coaxialement dans un logement (46) géométriquement congruent à celle-ci dans la tige de sélection (44) de la boîte de vitesses.
